Europäisches Patentamt

European Patent Office

Office européen des brevets

(19)

(11) Veröffentlichungsnummer : **0 086 736**
**B1**

(12) **EUROPÄISCHE PATENTSCHRIFT**

(45) Veröffentlichungstag der Patentschrift :
30.12.86

(21) Anmeldenummer : 83730008.6

(22) Anmeldetag : 27.01.83

(51) Int. Cl.⁴ : **B 01 D 59/18**, B 01 D 53/22,
B 01 D 45/06, B 01 D 45/16,
B 01 D 50/00, B 04 C 5/107

(54) Verfahren und Vorrichtung zur Abtrennung von festen und/oder flüssigen Partikeln aus Gasen bzw. von Feststoffen aus Flüssigkeiten sowie zur Trennung von Gasen bzw. Flüssigkeiten unterschiedlicher Dichte.

(30) Priorität : 01.02.82 DE 3203842

(43) Veröffentlichungstag der Anmeldung :
24.08.83 Patentblatt 83/34

(45) Bekanntmachung des Hinweises auf die Patenterteilung : 30.12.86 Patentblatt 86/52

(84) Benannte Vertragsstaaten :
AT CH FR GB IT LI NL SE

(56) Entgegenhaltungen :
DD-A- 149 029
DE-A- 1 619 894
DE-C- 358 394
US-A- 4 292 050

(73) Patentinhaber : Michel-Kim, Herwig
Bamberger Strasse 41
D-1000 Berlin 30 (DE)

(72) Erfinder : Michel-Kim, Herwig
Bamberger Strasse 41
D-1000 Berlin 30 (DE)

(74) Vertreter : Meinig, Karl-Heinz, Dipl.-Phys.
PATENTANWÄLTE PFENNING MEINIG & PARTNER
Kurfürstendamm 170
D-1000 Berlin 15 (DE)

## Beschreibung

Die Erfindung geht aus von einer Vorrichtung zur Abtrennung von festen und/oder flüssigen Partikeln aus Gasen bzw. von Feststoffen aus Flüssigkeiten sowie zur Trennung von Gasen bzw. Flüssigkeiten unterschiedlicher Dichte nach der Gattung des Anspruchs 1.

Es ist bekannt, Gas- und Flüssigkeitsgemische unter Ausnutzung der Zentrifugalbeschleunigung zu trennen. Eine derartige Vorrichtung ist in der DE-C-35 8394 beschrieben, bei der das zu reinigende Mittel zunächst eine Umkehrvorrichtung durchströmt und dann in eine Ringdüse ausläuft, wobei an deren innerer Wandung ein Ringspalt für die abzuscheidenden Bestandteile vorgesehen ist. Bei einer derartigen Vorrichtung treten hohe Druckverluste auf, da der Ringkanal derart ausgebildet ist, daß am Einlauf eine Beschleunigung erfolgt, nach etwa 75° wieder eine drastische Verzögerung, dann wieder eine Beschleunigung und nach etwa 170° eine merkliche Verzögerung, wodurch erhebliche Ablösungen und Turbulenzen entstehen, so daß bis zur Abschälung eine merkliche Rückmischung erfolgt.

Der vorliegenden Erfindung liegt die Aufgabe zugrunde, eine Vorrichtung zur Abtrennung von festen und/oder flüssigen Partikeln aus Gasen bzw. von Feststoffen aus Flüssigkeiten sowie zur Trennung von Gasen bzw. Flüssigkeiten unterschiedlicher Dichte zu schaffen, durch die hohe Abscheideleistungen bei geringen Druckverlusten geliefert werden.

Diese Aufgabe wird erfindungsgemäß durch die kennzeichnenden Merkmale des Anspruchs 1 in Verbindung mit den Merkmalen des Oberbegriffs gelöst. Durch die stetige Beschleunigung in dem um 180° umgelenkten Ringkanal durch die gleichmäßige Verringerung des Strömungsquerschnittes werden Turbulenzen unterdrückt und Druckverluste minimiert, so daß ein weitgehend laminares Strömungsbild erzielbar ist. Dadurch, daß die Anordnung zur Abschälung der unterschiedlich dichten Fraktionen im geringsten Strömungsquerschnitt angeordnet ist, bei dem die Radialbeschleunigung am größten ist, wird eine gute Abschälung und somit Trennung der Fraktionen mit gleicher Massenstromdichte ohne Staueffekte erzielt, wobei die Druckverluste gering gehalten sind. In den sich an die Abschälung anschließenden strömungsoptimierten Diffusoren wird die Verdichtungsenergie rückgewonnen, so daß die gesamten Druckverluste der Trenndüse gering sind. Nur die Kombination der stetigen Beschleunigung des strömenden Mediums im Ringkanal unter Umlenkung um 180°, der Trennung der Fraktionen im Bereich der höchsten Radialbeschleunigung und der Rückgewinnung der Verdichtungsenergie in strömungsoptimierten Diffusoren läßt eine Lösung der Aufgabe hinsichtlich der hohen Abscheideleistungen bei geringen Druckverlusten zu.

Durch die in den abhängigen Ansprüchen angegebenen Maßnahmen sind vorteilhafte Weiterbildungen und Verbesserungen möglich. Die Kombination mit elektrischen Feldern ist von hoher technischer Bedeutung, da eine Kombination der erfindungsgemäßen Vorrichtung mit Elektroabscheidern vorgenommen werden kann, wobei der Wirkungsgrad der gesamten Anordnung verbessert wird. Darüber hinaus ermöglicht die Kombination auch eine elektrische Oxydation von Sulfid zu Sulfat mit direkter Abscheidung von beispielsweise Ammonium-Sulfat.

Durch die Einspritzung von Flüssigkeiten vor der Trennung bei Gasgemischen lassen sich mit geringstem Druckverlust besonders hohe Relativgeschwindigkeiten zwischen kleinsten Partikeln und Waschflüssigkeiten erreichen, die durch die Trennung begünstigt wird. Der Abrieb der Düse wird dabei erheblich verringert, und die Flüssigkeit dient gleichzeitig zur Kühlung.

Weiterhin bietet die erfindungsgemäße Vorrichtung den Vorteil, daß sie bei einer Vielzahl von Trennungsvorgängen angewendet werden kann. So ist es möglich, Feinstäube auch aus heißen Gasen abzutrennen, was für die Gasaufbereitung von Gasturbinen notwendig ist, da diese eine hohe Reinheit der Gase erfordern. Energieverluste durch die Abkühlung von Gasen und ihre Reinigung können daher umgangen werden. Auch kann die erfindungsgemäße Vorrichtung bei der Isotopentrennung, insbesondere in der Urananreicherung verwendet werden und das bisher sehr energieaufwendige Trenndüsenverfahren ablösen. Da mit der erfindungsgemäßen Vorrichtung auch Wasser aus Pyrolysegasen abgetrennt werden kann, kann ein Schlüsselproblem in der Pyrolyse, nämlich die Beseitigung der Schwelwässer, gelöst werden. Weiterhin ist es möglich, Schwefeldioxyd aus Rauchgasen abzutrennen, selektive Wäsche von Gasbestandteilen aus Gasgemischen durchzuführen, Öle aus Wasser und Sedimente aus Abwässern abzutrennen und eine kompakte Gaskühlung durch Einspritzung von Flüssigkeiten durchzuführen, ohne daß Flüssigkeitstropfen mitgerissen werden.

Die Erfindung ist in der Zeichnung dargestellt und wird in der nachfolgenden Beschreibung erläutert. Es zeigen :

Figur 1 ein erstes Ausführungsbeispiel der erfindungsgemäßen Vorrichtung, bei der die Diffusoren ineinander in gleicher Strömungsrichtung angeordnet sind ;

Figur 2 ein zweites Ausführungsbeispiel der erfindungsgemäßen Vorrichtung, bei der die Diffusoren in entgegengesetzter Richtung angeordnet sind ;

Figur 3 die erfindungsgemäße Vorrichtung, die in einen Zyklon eingebaut ist ; und

Figur 4 eine Kombination der erfindungsgemäßen Vorrichtung mit einem Rekuperator.

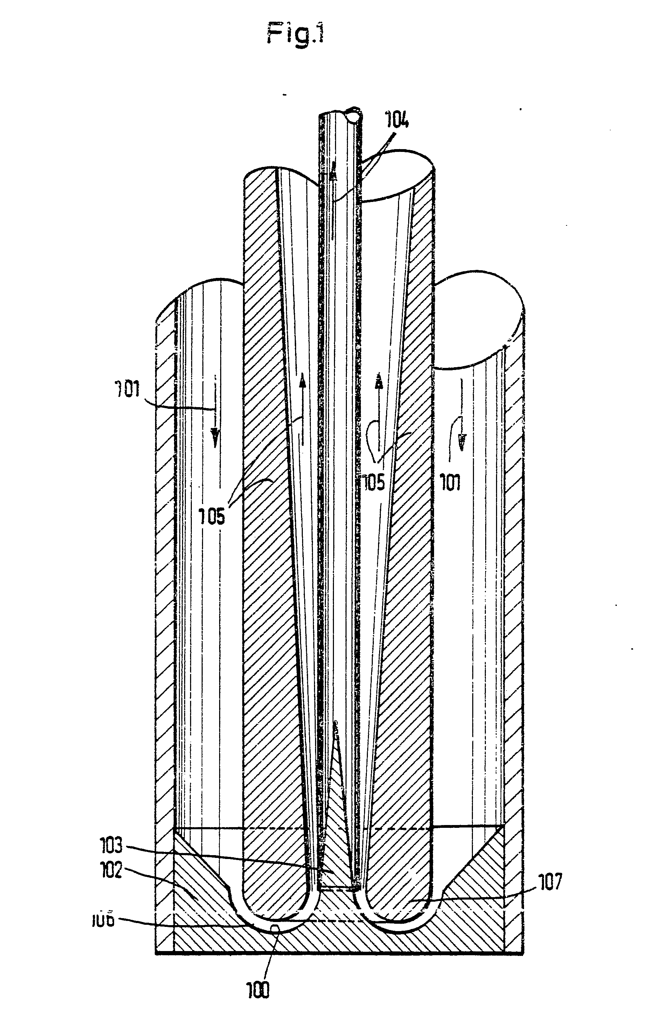

Bei dem in Fig. 1 im Schnitt dargestellten Ausführungsbeispiel ist mit 101 eine rotationssymmetrische Düsenzuführung bezeichnet.

Die Zuführung 101 geht in eine ringförmige Düse 100 über. Rotationssymmetrisch um die Mittelachse herum ist ein Diffusor 104 für die schwere Fraktion und ein Diffusor 105 für die leichte Fraktion vorgesehen, wobei der Diffusor 105 für die leichte Fraktion um den Diffusor 104 für die schwere Fraktion herum angeordnet ist. Der Spalt der Düse 100 wird durch den Düsenboden 102 und durch den sich zum unteren Ende hin verbreiternden Diffusor 105 gebildet, wobei der Düsenboden 102 eine ringförmige Umlenkung 106 aufweist, die in eine Kegelspitze 103 übergeht. Der Diffusor 105 schließt an seinem unteren Ende mit einem abgerundeten Teil 107 ab und bildet die innere Krümmungsbegrenzung des Düsenspaltes, während die ringförmige Umlenkung 106 des Düsenbodens 102 die äußere Krümmungsbegrenzung bildet. Die Kegelspitze 103 ragt in den Diffusor 104 für die schwere Fraktion hinein. Der Strömungsquerschnitt der Düse 100 verringert sich von außen nach innen kontinuierlich.

Die Wirkungsweise der in Fig. 1 dargestellten Vorrichtung ist wie folgt : Das staub- oder aerosolbeladene Gas, das Gasgemisch oder die Flüssigkeitsgemische gelangen über die Düsenzuführung 101 in die ringförmige Düse 100, wo sie bei hohen Geschwindigkeiten um 180° umgelenkt werden. Die Durchströmung der Düse erfolgt von außen nach innen, da dadurch in den wesentlichen Strömungsbereichen eine maximale Radialbeschleunigung erzielt wird. Im Bereich der größten Radialbeschleunigung soll die Düse ihren geringsten Strömungsquerschnitt aufweisen. Durch die hohe Geschwindigkeit findet eine Entmischung der unterschiedlichen Fraktionen statt. Im Bereich der stärksten Trennung der Gemische erfolgt eine Abschälung der unterschiedlich dichten Fraktionen am unteren Ende des Diffusors 104 und die leichte Fraktion wird durch den Diffusor 105 und die schwere Fraktion mittels des Diffusors 104 weitergeleitet. Die Diffusoren sind derart geformt, daß der Strömungswiderstand gering gehalten werden kann. Die in den Diffusor 104 hineinragende Kegelspitze 103 ermöglicht eine abrißarme Diffusion der schweren Fraktion. Die jeweiligen Fraktionen werden in den Diffusoren 104, 105 entspannt, wodurch ein großter Teil der vorher aufzubringenden Verdichtungsenergie zurückgewonnen werden kann.

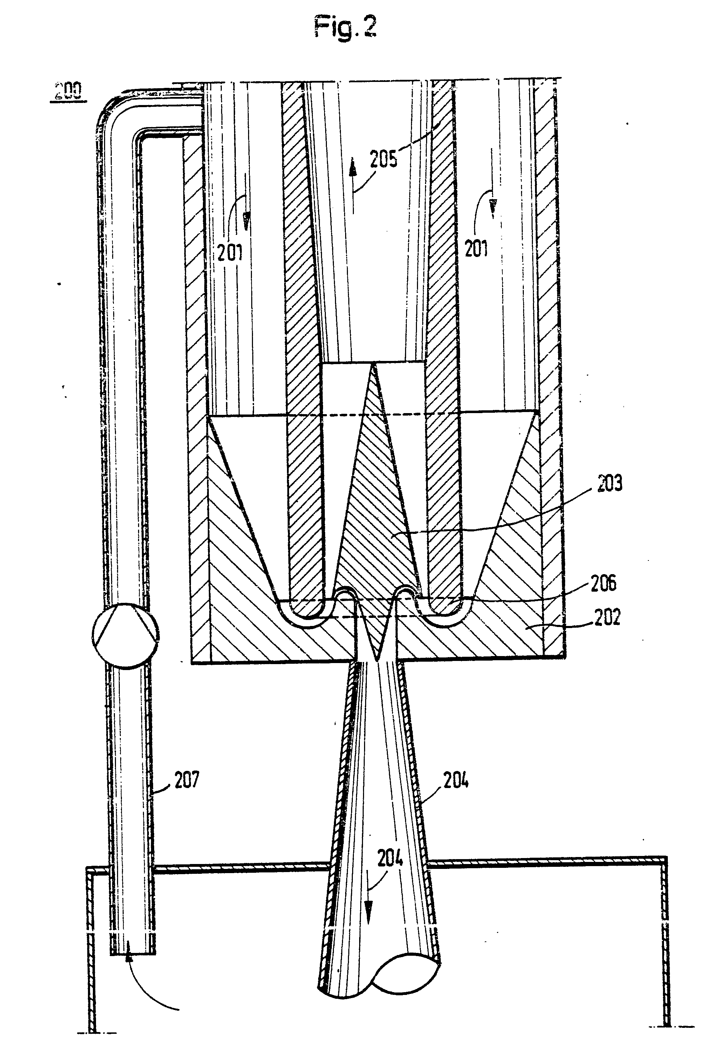

In Fig. 2 ist ein Schnitt durch ein weiteres Ausführungsbeispiel dargestellt. Der Unterschied zu dem Ausführungsbeispiel nach Fig. 1 besteht darin, daß die Diffusoren 204 und 205 nicht ineinander in gleicher Strömungsrichtung angeordnet sind, sondern entgegengesetzt. Der Diffusor 204 für die schwere Fraktion ist hier nach unten hin angeordnet. Zur Führung der Bestandteile der schweren Fraktion ist ein Umlenkteil 203 vorgesehen, das an die Stelle der Kegelspitze 103 tritt. Die Abschälung der unterschiedlich dichten Fraktionen erfolgt nun an diesem Umlenkteil 203. Über ein Bypass-System 207 können Bestandteile der schweren Fraktion in die Düse zurückgeführt werden. Die Wirkungsweise ist entsprechend der oben beschriebenen.

Um die Trennung der unterschiedlichen Fraktionen zu verbessern kann zwischen dem Düsenboden 202 und dem Diffusor 205, der mit seinem abgerundeten Teil 206 gleichzeitig als innere Krümmungsbegrenzung des Spaltes dient, ein elektrisches Feld angelegt werden.

Bei Gasgemischen können in die Düsenzuführung 101, 201 zusätzlich Flüssigkeiten eingespritzt werden, wodurch sich die Abtrennung von Feststoffen aus den Gasen verbessert wird. Außerdem dienen die Flüssigkeiten zur Wäsche, zur Kühlung und zur Verminderung des Abriebes der Düse, wodurch sich ihre Standzeiten erheblich erhöhen. Die Flüssigkeiten können dann mit der schweren Fraktion entsprechend Fig. 2 abgetrennt werden.

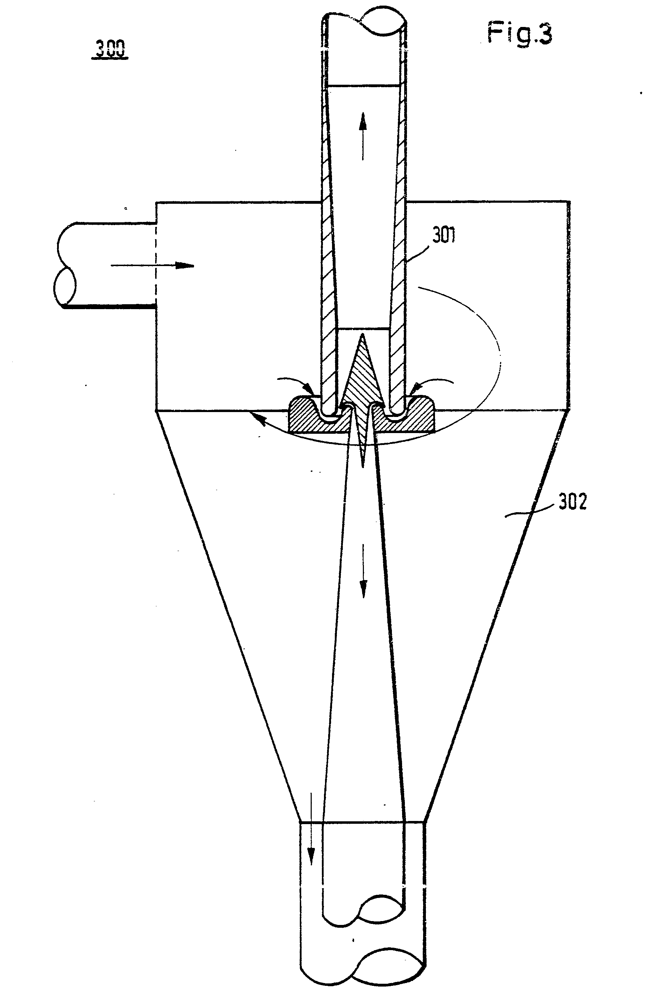

Fig. 3 zeigt die Verwendung der erfindungsgemäßen Vorrichtung in einem Zyklon 302. Diese Anordnung ist eine besonders vorteilhafte Kombination, da die groben Bestandteile im Zyklon 302 und die feinen Bestandteile in der ringförmigen Düse 301 abgeschieden werden können. Dies geschieht entsprechend der oben beschriebenen Wirkungsweise. Diese Anordnung bringt weiterhin den besonderen Vorteil mit sich, daß bereits bestehende Zyklone durch den Einbau der erfindungsgemäßen Vorrichtung umgerüstet werden können.

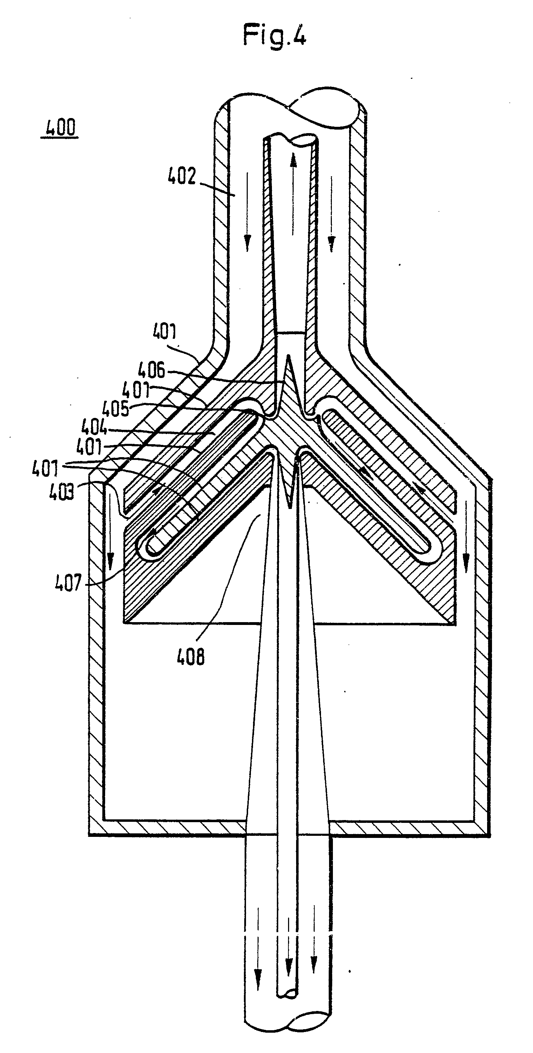

Die in Fig. 4 dargestellte Vorrichtung 400 zeigt die Kombination der erfindungsgemäßen ringförmigen Düse mit einem kegelförmigen Rekuperator 401. Bei diesem Ausführungsbeispiel treten die heißen Rauchgase in die Zuführung 402 ein und strömen radialsymmetrisch entlang der Kegelwände des Rekuperators nach außen. Gröbere Bestandteile können durch eine Umlenkung 403 abgeschieden werden. Die vorgereinigten Gase strömen dann wieder radialsymmetrisch entlang einer Kegeloberfläche nach innen, wobei sich die Strömungsgeschwindigkeit durch die Verengung des Querschnitts erhöht. Im Inneren erfolgt eine Umlenkung um 180°. Durch eine Schälvorrichtung 405 wird eine weitere Staubfraktion abgetrennt. Diese Fraktion wird über einen Diffusor 406 zu einem separaten Abscheidersystem geführt und dann über einen Bypass zurückgeführt. Nach dieser ersten Abschälung wird das Gas an einem kegelförmigen Wärmetauscher 407 nach außen und anschließend wieder nach innen geführt, um dann entsprechend Fig. 1 in der abschließenden ringförmigen Düse 100 feingereinigt zu werden.

Der Wärmetauscher 407 muß nicht kegelförmig ausgebildet sein. Es kann auch ein planparalleler Flächenaustauscher verwendet werden, der aber ebenfalls in radialer Richtung von innen nach außen und von außen nach innen umströmt wird, wobei die Umlenkung im Inneren mit hohen Radialbeschleunigungen eine Abschälung begünstigt. Allerdings kann sich die baulich einfachere, flächige Anordnung bei heißen Gasen sehr leicht verziehen. Bei der kegelförmigen Anordnung führen Temperaturspannungen nur zu einer Veränderung des Kegelwinkels, was baulich sehr leicht aufgefangen werden kann.

**Patentansprüche**

1. Vorrichtung zur Abtrennung von festen und/oder flüssigen Partikeln aus Gasen bzw. von Feststoffen aus Flüssigkeiten sowie zur Trennung von Gasen bzw. Flüssigkeiten unterschiedlicher Dichte mit einer Zuführung für das Gas- und/oder Flüssigkeitsgemisch, mit einer ringförmigen Düse, durch die das Gas- und/oder Flüssigkeitsgemisch von außen nach innen radialsymmetrisch geführt wird und mit Auslässen für die getrennten Fraktionen, dadurch gekennzeichnet, daß der Spalt der ringförmigen Düse (100) um 180° umgelenkt ist, daß der Strömungsquerschnitt sich im Krümmungsbereich in Strömungsrichtung kontinuierlich verringert und daß im geringsten Strömungsquerschnitt eine Anordnung zur Abschälung der unterschiedlich dichten Fraktionen vorgesehen ist, an die sich zur Weiterleitung der getrennten Fraktionen mindestens zwei Diffusoren (104, 105) anschließen.

2. Vorrichtung nach Anspruch 1, dadurch gekennzeichnet, daß die Diffusoren (104, 105) in gleicher Strömungsrichtung ineinander angeordnet sind.

3. Vorrichtung nach Anspruch 2, dadurch gekennzeichnet, daß in den inneren Diffusor (104) für die schwere Fraktion axial ein Kegel (103) hineinragt.

4. Vorrichtung nach Anspruch 1, dadurch gekennzeichnet, daß die Diffusoren (204, 205) in entgegengesetzter Richtung angeordnet sind, wobei ein Umlenkteil (203) zur Umlenkung der schweren Fraktion vorgesehen ist, das gleichzeitig als Anordnung zur Abschälung dient.

5. Vorrichtung nach einem der Ansprüche 1 bis 4, dadurch gekennzeichnet, daß zur Rückgewinnung von Verdichtungsenergie die Diffusoren (104, 105) derart ausgebildet sind, daß sich die getrennten Fraktionen verzögern können.

6. Vorrichtung nach einem der Ansprüche 1 bis 5, dadurch gekennzeichnet, daß sie in einen Rekuperator (401) integriert ist.

7. Vorrichtung nach einem der Ansprüche 1 bis 5, dadurch gekennzeichnet, daß sie mit einem Zyklon (302) kombiniert ist.

8. Vorrichtung nach einem der Ansprüche 1 bis 7, dadurch gekennzeichnet, daß zur Verbesserung der Trennung der Fraktionen zwischen den begrenzenden Krümmungsflächen ein elektrisches Feld anliegt.

9. Vorrichtung nach einem der Ansprüche 1 bis 8, dadurch gekennzeichnet, daß an der Düsenzuführung eine Einspritzvorrichtung zum Einspritzen von Flüssigkeiten in Gasgemische vorgesehen ist, die mit den schweren Fraktionen abgetrennt werden.

**Claims**

1. Apparatus for separating solid and/or liquid particles from gases, or solids from liquids, as well as for the separation of gases or liquids of different density with a supply means for the gas and/or liquid mixture, with an annular nozzle, through which the gas and/or liquid mixture is radially symmetrically guided from the outside to the inside and with outlets for the separated fractions, characterized in that the slot of the annular nozzle (100) is deflected by 180°, that the flow cross-section continuously decreases in the flow direction in the curvature zone and that in the smallest flow cross-section is provided an arrangement for skimming off the varyingly dense fractions and to which are connected at least two diffusers (104, 105) for passing on the separated fractions.

2. Apparatus according to claim 1, characterized in that the diffusers (104, 105) are placed in one another in the same flow direction.

3. Apparatus according to claim 2, characterized in that a cone (103) projects axially into the inner diffuser (104) for the heavy fraction.

4. Apparatus according to claim 1, characterized in that the diffusers (204, 205) are arranged in opposite directions, a deflection part (203) being provided for deflecting the heavy fraction and which simultaneously serves as the skimming off arrangement.

5. Apparatus according to one of the claims 1 to 4, characterized in that for the recovery of the compression energy, diffusers (104, 105) are constructed in such a way that the separated fractions can be delayed.

6. Apparatus according to one of the claims 1 to 5, characterized in that it is integrated into a recuperator (401).

7. Apparatus according to one of the claims 1 to 5, characterized in that it is combined with a cyclone separator (302).

8. Apparatus according to one of the claims 1 to 7, characterized in that for improving the separation of the fractions between the adjacent curvature surfaces an electric field is applied.

9. Apparatus according to one of the claims 1 to 8, characterized in that an injection means for injecting liquids into gaseous mixtures, which are separated with the heavy fractions is provided on the nozzle supply means.

**Revendications**

1. Dispositif de séparation des particules solides et/ou liquides des gaz, ou des substances solides des liquides, et de séparation de gaz ou de liquides de densités différentes, pourvu d'une conduite d'entrée du mélange gazeux et/ou liquide, d'une tuyère de révolution symétrique à travers laquelle le mélange gazeux et/ou liquide circule de l'extérieur vers l'intérieur, et d'orifices de sortie pour les fractions séparées, caractérisé en ce que le passage annulaire (100) de la tuyère provoque une déviation à 180°, en ce que la section de passage dans la région du coude diminue de manière continue dans la direction de l'écoulement, et en ce qu'il est prévu à hauteur de la section la plus faible un dispositif d'écumage des particules de densités différentes auquel se raccordent, au moins deux diffuseurs (104, 105) en vue d'assurer l'évacuation de ces particules.

2. Dispositif selon la revendication 1, caractérisé en ce que les diffuseurs (104, 105) sont disposés l'un à l'intérieur de l'autre dans la même direction d'écoulement.

3. Dispositif selon la revendication 2, caractérisé en ce qu'un cône (103) pénètre axialement à l'intérieur du diffuseur intérieur (104) destinés à la fraction lourde.

4. Dispositif selon la revendication 1, caractérisé en ce que les diffuseurs (204, 205) sont disposés dans des directions opposées, et en ce qu'il est prévu une chicane (203) de renvoi de la fraction lourde, qui sert en même temps de dispositif d'écumage.

5. Dispositif selon l'une quelconque des revendications 1 à 4, caractérisé en ce que les diffuseurs (204, 205) sont constitués de manière à récupérer l'énergie de compression des particules et en ce que les fractions séparées peuvent être retardées.

6. Dispositif selon l'une quelconque des revendications 1 à 5, caractérisé en ce qu'il est intégré dans un récupérateur (401).

7. Dispositif selon l'une quelconque des revendications 1 à · 5, caractérisé en ce qu'il est combiné à un cyclone (302).

8. Dispositif selon l'une quelconque des revendications 1 à 7, caractérisé en ce qu'un champ électrique est appliqué entre les faces délimitant le coude de la tuyère, dans le but d'améliorer la séparation des fractions.

9. Dispositif selon l'une quelconque des revendications 1 à 8, caractérisé en ce qu'il est prévu dans la conduite d'alimentation de la tuyère un dispositif permettant d'injecter des liquides dans les mélanges gazeux lesquels liquides sont ensuite séparés en même temps que les fractions lourdes.

## Fig.1

# Fig. 2

300

Fig.3

301

302

## Fig.4

400